# EUROPEAN PATENT SPECIFICATION

(11) **EP 3 210 764 B1**
(45) Date of publication and mention of the grant of the patent: **19.06.2019**
(21) Application number: 15869650.0
(22) Date of filing: 21.10.2015
(51) Int. Cl.: B29C 70/06, B64C 1/00, B64C 1/12

(54) **COMPOSITE STRUCTURE, AIRCRAFT, AND METHOD FOR DESIGNING CORNER FILLET SECTION**
VERBUNDSTRUKTUR, FLUGZEUG UND VERFAHREN ZUM ENTWURF EINES ECKLEISTENABSCHNITTS
STRUCTURE COMPOSITE, AVION ET PROCÉDÉ DE CONCEPTION DE SECTION DE CONGÉ DE RACCORDEMENT

(30) Priority: 15.12.2014 JP 2014253459
(43) Date of publication of application: 30.08.2017
(73) Proprietor: Mitsubishi Heavy Industries, Ltd., Tokyo 108-8215 (JP)
(72) Inventor: ABE, Toshio, Tokyo 108-8215 (JP); TAKAGI, Kiyoka, Tokyo 108-8215 (JP); KOYAMA, Takayuki, Tokyo 108-8215 (JP)
(74) Representative: Henkel, Breuer & Partner
(86) International application number: PCT/JP2015/079651
(87) International publication number: WO 2016/098442

(56) References cited:
- WO-A1-94/01271
- WO-A1-02/066235
- WO-A1-2008/147176
- DE-A1-102008 008 200
- JP-A- 2003 039 566
- JP-A- 2005 337 272
- JP-A- 2006 181 751
- JP-A- 2013 534 478
- JP-A- 2014 012 403
- US-A1- 2011 139 932
- US-A1- 2013 004 715
- US-B1- 8 182 640

## Description

### Field

The present invention relates to a design method for a corner fillet part of a composite structure.

### Background

Traditionally, a composite hat stiffener has been known as a composite structure having a corner part (for example, refer to JP 2014-12403 A). The composite hat stiffener includes a composite hat section, a plurality of composite stiffening plies bonded to the composite hat section, and a noodle-shaped corner filler. The noodle-shaped corner filler is arranged in a substantially triangular noodle-shaped corner filler region formed by the plurality of composite stiffening plies. Accordingly, the noodle-shaped corner filler prevents from being pulled off by the pull-off loads (pull-off stress).

US 8182640 B1 discloses a process for bonding aircraft components with a surface, such as an aircraft skin. The process includes bonding a first component, for example an aircraft part such as a cross-stringer, to a second component, for example a skin, at a bonding surface, for example at an under side of a foot of the first component by means of a bonding agent placed in between.

### Summary

### Technical Problem

Here, the noodle-shaped corner filler is generally formed by bundling prepregs which are formed by impregnating carbon fibers with resin. Here, the prepreg is formed of carbon fibers aligned in one direction, and is formed by bundling noodle-like prepregs. Therefore, the rigidity of the noodle-shaped corner filler is almost constant along a direction in which the corner filler is arranged. The pull-off load to be applied to the part where the noodle-shaped corner filler is arranged is not uniform in the direction in which the corner filler is arranged. For example, there is a case where the part where the noodle-shaped corner filler arranges is largely displaced (bent). In this case, the pull-off load at the part becomes large. At this time, since the rigidity of the noodle-shaped corner filler is almost constant, it is difficult to adjust the rigidity according to the part where the corner filler is arranged. Therefore, in a case where the rigidity of the noodle-shaped corner filler is high, the stress is increased when the noodle-shaped corner filler follows the displacement of the part.

Therefore, a purpose of the present invention is to provide a design method for a corner fillet part a composite structure in which rigidity of the corner fillet part can be preferably adjusted.

### Solution to Problem

A design method according to the invention for a corner fillet part of a composite structure comprises the features of claim 1.

With this method, by a displacing a corner part largely, even when a pull-off stress to be applied to the corner part increases, an increase in the stress can be prevented and the corner fillet part can preferably follow the displacement of the corner part, by decreasing rigidity of the corner fillet part. On the other hand, when the pull-off stress to be applied to the corner part is small, the corner fillet part can function as a strength member by increasing the rigidity of the corner fillet part.

It is preferable that the pull-off stress to be applied to the corner part is adjusted to be decreased by adjusting the rigidity of the corner fillet part to be decreased.

With this method, the increase in the pull-off stress to be applied to the corner part can be prevented by decreasing the rigidity of the corner fillet part.

It is preferable that the corner fillet part includes at least a resin material out of the resin material and a rigidity material, and the rigidity is adjusted based on a content of the rigidity material relative to the resin material and the rigidity material.

With this method, the rigidity can be adjusted to be low by decreasing a content of a rigidity material in the corner fillet part. Also, the rigidity can be adjusted to be high by increasing the content of the rigidity material in the corner fillet part. For example, the resin material is a material having a function such as thermosetting property and thermoplasticity. Also, for example, carbon fibers and glass fibers are used as the rigidity material. The resin material and the rigidity material are not limited to those described above.

It is preferable that the corner fillet part includes at least a resin material out of the resin material and a rigidity material, and the rigidity is adjusted based on kinds of materials used as the resin material and the rigidity material.

With this method, the rigidity can be adjusted by changing the kinds of the resin material and the rigidity material in the corner fillet part.

It is preferable that the rigidity of the corner fillet part is adjusted based on a shape or a size of the corner fillet part.

With this method, the rigidity can be adjusted by changing the shape or the size of the corner fillet part. Brief Description of Drawings
FIG. 1 is a perspective view of an aircraft to which a composite structure being a design object of the method according to the invention has been applied.
FIG. 2 is a sectional view of the cured composite structure being a design object of the method according to the invention.
FIG. 3 is an explanatory view regarding rigidity and a pull-off stress of a wing body.
FIG. 4 is an explanatory view regarding rigidity and a pull-off stress around an opening.
FIG. 5 is an explanatory view regarding rigidity and a pull-off stress of a tank.
FIG. 6 is an explanatory diagram of a forming method for a composite structure according to the invention.

### Description of Embodiments

An embodiment of a method according to the present invention is described in detail below with reference to the drawings.

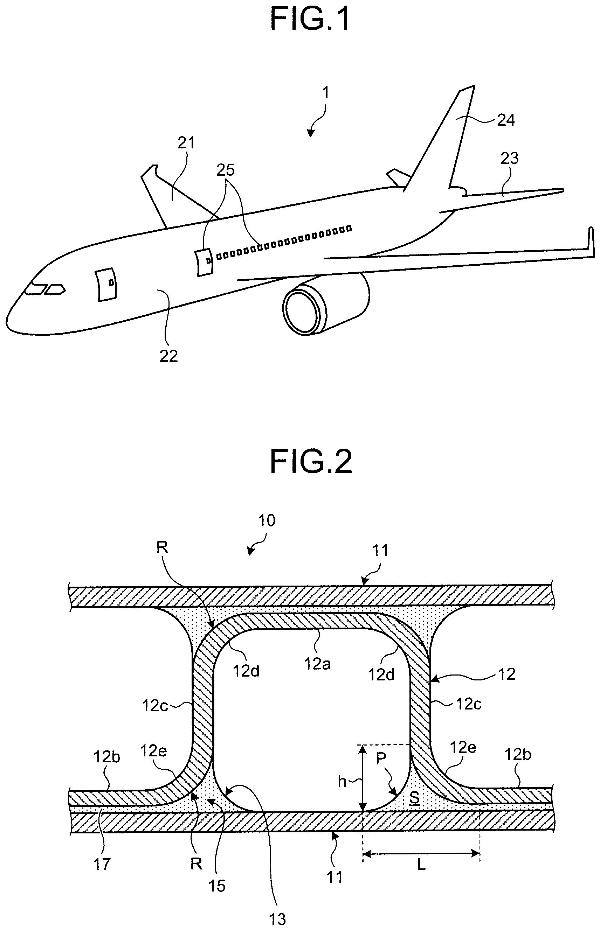

An aircraft 1 illustrated in FIG. 1 is formed of a composite structure 10. For example, the composite structure 10 is applied to a main wing 21, a horizontal stabilizer 23, a vertical stabilizer 24, or a fuselage 22. According to a part of the aircraft 1, a stress to be applied is different. For example, the stresses applied to blade ends of the wing bodies of the main wing 21, the horizontal stabilizer 23, and the vertical stabilizer 24 formed of the composite structure 10 are larger than those applied to blade roots. This will be described in detail below. Also, in the fuselage 22 formed of the composite structure 10, an opening 25 such as a window and a door is formed, and a stress to be applied around the opening 25 is large. First, the composite structure 10 is described with reference to FIG. 2.

As illustrated in FIG. 2, the composite structure 10 includes first composite materials 11, a second composite material 12, and corner fillet parts 13.

The first composite material 11 and the second composite material 12 are formed of carbon fiber reinforced plastic (CFRP). In the present example, the first composite material 11 and the second composite material 12 are formed of CFRP. However, materials of the first composite material 11 and the second composite material 12 are not especially limited when they are formed of a composite material using resin and fibers. The first composite material 11 is formed in a plate-like shape, and the pair of first composite materials 11 is provided so that plate surfaces are opposed to each other. For example, the first composite material 11 is applied to a skin (outer plate) provided on the wing body and the fuselage 22 of the aircraft 1.

The second composite material 12 is provided between the pair of first composite materials 11. For example, the second composite material 12 is applied to stringers provided in the wing body and the fuselage 22 of the aircraft. The second composite material 12 includes a contact part 12a having contact with one of the first composite materials 11, a contact part 12b having contact with the other first composite material 11, a longitudinal part 12c provided across a space between the pair of first composite materials 11, a bent part 12d between the contact part 12a and the longitudinal part 12c, and a bent part 12e between the contact part 12b and the longitudinal part 12c. The second composite material 12 is formed to be extended in a depth direction which is the front-back direction in FIG. 2.

The contact part 12a is provided along a plate surface of one of the first composite materials 11. The contact part 12b is provided along a plate surface of the other first composite material 11. Here, the direction in which the pair of first composite materials 11 faces each other is a thickness direction (vertical direction in FIG. 2), and the direction perpendicular to the depth direction and the thickness direction is a width direction (horizontal direction in FIG. 2). At this time, the contact parts 12a and 12b are alternately arranged in the width direction. The longitudinal part 12c is arranged to be extended in the thickness direction. The bent part 12d couples the contact part 12a with the longitudinal part 12c, and a section, which is perpendicular to the depth direction, of the bent part 12d is formed to have a predetermined radius of curvature. The bent part 12e couples the contact part 12b with the longitudinal part 12c, and a section, which is perpendicular to the depth direction, of the bent part 12d is formed to have a predetermined radius of curvature. The second composite material 12 is formed in a hat-like shape by integrally and continuously forming the contact parts 12a and 12b, the longitudinal part 12c, and the bent parts 12d and 12e.

An adhesive layer 17 is provided between each first composite material 11 and the second composite material 12. The adhesive layer 17 bonds each first composite material 11 and the contact parts 12a and 12b of the second composite material 12. The adhesive layer 17 is formed by thermally curing a film adhesive arranged between the first composite material 11 and the second composite material 12 before cured.

The first composite material 11 and the second composite material 12 bonded via the adhesive layer 17 form corner parts 15 outside the bent parts 12d and 12e in the radial direction. The corner part 15 is formed to be extended in the depth direction. The corner fillet part 13 is provided in the corner part 15 to improve a peeling strength between the first composite material 11 and the second composite material 12. The shapes of the first composite materials 11 and the second composite material 12 are not limited to those illustrated in FIG. 2. Any shapes can be used when the first composite materials 11 and the second composite material 12 can form the corner part 15. Also, the shape of the corner part 15 is not limited to the shape illustrated in FIG. 2, the corner part 15 may be formed in any shape.

The corner fillet part 13 is provided at the corner part 15 between the first composite material 11 and the second composite material 12. The corner fillet part 13 relaxes the pull-off stress between the first composite material 11 and the second composite material 12 at the corner part 15. The corner fillet part 13 is formed by thermally curing a film adhesive arranged before the composite structure 10 is cured. The film adhesive is filled to form a design shape P so that the corner fillet part 13 becomes a previously designed design shape P. Here, the outside of each of the bent parts 12d and 12e in the radial direction has a predetermined radius of curvature R, and the corner fillet part 13 is formed along each of the bent parts 12d and 12e.

Specifically, in the design shape P of the corner fillet part 13, a surface having contact with the second composite material 12 (bent parts 12d and 12e thereof) in the section perpendicular to the depth direction has a predetermined radius of curvature R, and a surface facing outside also has a predetermined radius of curvature R. That is, the cross-section area S of the design shape P of the corner fillet part 13 in the present example is expressed by "S = L × h - πR²/2". The reference L indicates the length of the base of the corner fillet part 13 having contact with the first composite material 11, and the reference h indicates the length (height) of the corner fillet part 13 in the thickness direction from the first composite material 11. The design shape P of the corner fillet part 13 is not limited to the above shape and may be any shape when the design shape P can relax the pull-off stress at the corner part 15.

At this time, since the corner fillet part 13 and the adhesive layer 17 are formed by using the film adhesive, the corner fillet part 13 and the adhesive layer 17 are formed as including the same material. Here, the film adhesive is formed of a thermosetting resin material. For example, the film adhesive has a film-like shape having a film thickness of about 0.1 mm to 0.2 mm formed by using epoxy-based resin. The corner fillet part 13 includes a resin material and a rigidity material. In the present example, the film adhesive has been used as a resin material. However, for example, a resin material having a function such as thermoplasticity may be used, and the resin material is not especially limited. Also, for example, the rigidity material may be a carbon-based material such as carbon fibers or carbon nanotubes. Also, the rigidity material may be glass fibers. Also, when the carbon fibers or the glass fibers which have been cut may be used. In the following description, a thermosetting resin material is applied as a resin material and a carbon-based material is applied as a rigidity material.

Here, in the corner fillet part 13, the ratio of the thermosetting resin material and the carbon-based material is adjusted based on the pull-off stress to be applied to the corner part 15. Specifically, the content of the carbon-based material in the corner fillet part 13 is decreased as the pull-off stress to be applied to the corner part 15 increases. On the other hand, the content of the carbon-based material in the corner fillet part 13 increases as the pull-off stress to be applied to the corner part 15 is decreased. Therefore, for example, when it is desired that the corner fillet part 13 function as a strength member, the content of the carbon-based material in the corner fillet part 13 becomes large. On the other hand, when it is desired to improve a following capability relative to a displacement of the member of the corner part 15, the content of the carbon-based material in the corner fillet part 13 becomes small. A case where the content of the carbon-based material is small includes a case where the content is zero percent. In this case, the corner fillet part 13 is formed of a thermosetting resin material.

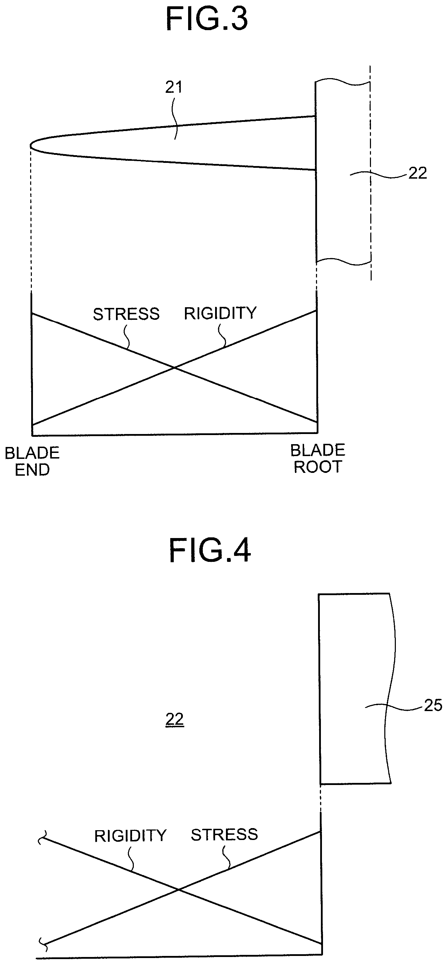

Next, the rigidity and the pull-off stress P of the corner fillet part 13 when the composite structure 10 is applied to the wing body are described with reference to FIG. 3. In FIG. 3, a case where the composite structure 10 is applied to the main wing 21 as the wing body is described. A blade root of the main wing 21 is connected to the fuselage 22, and a blade end of the main wing 21 is a free end. Regarding the main wing 21, the displacement of the blade root is small, and the displacement increases as it goes toward the blade end.

As illustrated in FIG. 3, the pull-off stress applied to the main wing 21 is small on the side of the blade root, and the pull-off stress increases as it goes toward the blade end. In contrast to the pull-off stress, the rigidity of the corner fillet part 13 is adjusted to be high at the blade root and to be decreased as it goes toward the blade end. Therefore, regarding the corner fillet part 13 provided in the main wing 21, the content of the carbon-based material at the blade root is large, and the content of the carbon-based material is decreased as it goes toward the blade end. This is because the following capability of the corner fillet part 13 relative to the displacement of the blade end is improved at the blade end of the main wing 21 where the displacement is large. Also, this is because the corner fillet part 13 functions as a strength member at the blade root of the main wing 21 where the displacement is small.

Next, the rigidity and the pull-off stress of the corner fillet part 13 when the composite structure 10 is applied to the fuselage 22 are described with reference to FIG. 4. The opening 25 such as a window and a door is formed in the fuselage 22. In the fuselage 22, the displacement at an opening edge along the opening 25 is large, and the displacement is decreased with distance from the opening 25.

As illustrated in FIG. 4, the pull-off stress to be applied to the fuselage 22 is large on the side of the opening 25 and is decreased with distance from the opening 25. In contrast to the pull-off stress, the rigidity of the corner fillet part 13 is adjusted to be low on the side of the opening 25 (opening edge) and to be increased with distance from the opening 25. Therefore, regarding the corner fillet part 13 provided in the fuselage 22, the content of the carbon-based material on the side of the opening 25 is small, and the content of the carbon-based material increases with distance from the opening 25. This is because the following capability of the corner fillet part 13 relative to the displacement of the opening edge is improved on the side of the opening 25 of the fuselage 22 where the displacement is large. Also, this is because the corner fillet part 13 functions as a strength member in the fuselage 22 which is separated from the opening 25 and where the displacement is small.

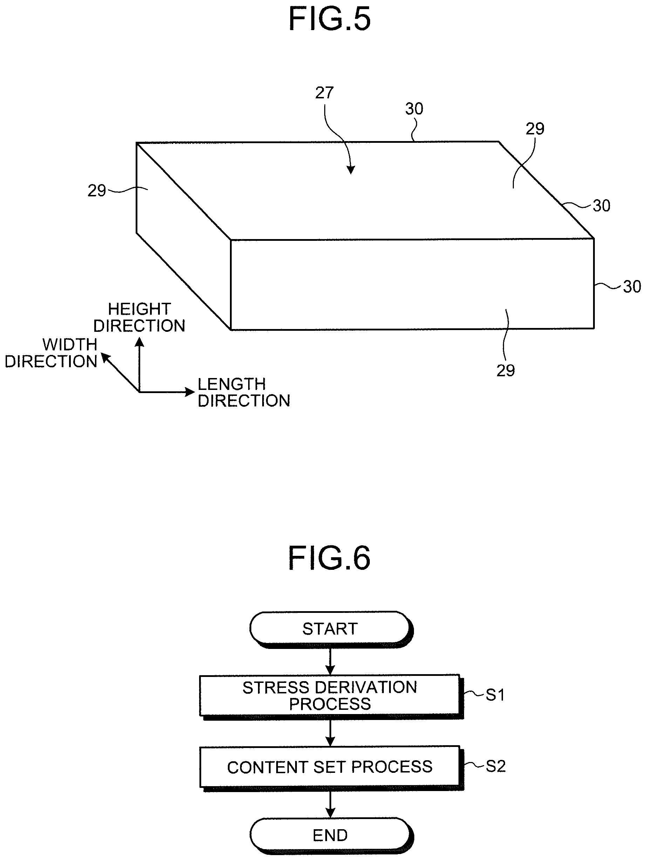

Next, the rigidity and the pull-off stress of the corner fillet part 13 when the composite structure 10 is applied to a tank 27 to store fuel and the like are described with reference to FIG. 5. The tank 27 is formed in a rectangular box-like shape. Here, directions in a three-dimensional orthogonal coordinate system are respectively indicated as the length direction, the width direction, and the height direction. The tank 27 includes two wall surfaces 29 perpendicular to the length direction, two wall surfaces 29 perpendicular to the width direction, and two wall surfaces 29 perpendicular to the height direction. The tank 27 is formed by bonding the six wall surfaces 29 as the wall surfaces cross with each other.

To make an intersection part 30 where the wall surfaces 29 cross with each other function as a strength member, the tank 27 needs high rigidity. Also, in the tank 27, a displacement at the center part in the length direction is large due to an internal pressure. Therefore, the rigidity of the corner fillet part 13 is adjusted to be low at the center part of the tank 27 in the length direction and to be high at the intersection parts 30 of the tank 27. Therefore, regarding the corner fillet part 13 provided in the tank 27, the content of the carbon-based material at the center part of the tank 27 in the length direction is small, and the content of the carbon-based material at the intersection part 30 of the tank 27 is large.

Next, a design method for the corner fillet part 13 is described with reference to FIG. 6. First, in the aircraft 1, a pull-off stress to be applied to a structure such as the wing body including the main wing 21 and the fuselage 22 is derived (step S1: stress derivation process). Next, the rigidity of the corner fillet part 13 is set so that the derived pull-off stress becomes an appropriate stress, and the content of the carbon-based material included in the corner fillet part 13 is set based on the set rigidity (step S2: content set process). Then, the ratio of the thermosetting resin material and the carbon-based material in the corner fillet part 13 is set based on the content of the carbon-based material which has been set in the content set process. The corner fillet part 13 is formed by thermally curing the materials with this ratio.

As described above, according to the present embodiment, with a large displacement of the corner part 15, even when the pull-off stress to be applied to the corner part 15 is large, the rigidity can be adjusted to be low by decreasing the content of the carbon-based material in the corner fillet part 13. Therefore, the corner fillet part 13 can prevent an increase in the stress and can preferably follow the displacement of the corner part 15. On the other hand, when the pull-off stress to be applied to the corner part 15 is small, the rigidity can be adjusted to be high by increasing the content of the carbon-based material in the corner fillet part 13. Therefore, the corner fillet part 13 can function as a strength member.

Also, according to the present embodiment, since the displacement of the blade end of the wing body such as the main wing 21 is large, even when the pull-off stress to be applied to the corner part 15 of the blade end is large, the rigidity can be adjusted to be low by decreasing the content of the carbon-based material in the corner fillet part 13. Therefore, the corner fillet part 13 can prevent an increase in the stress and can preferably follow the displacement of the blade end. On the other hand, the displacement of the blade root of the wing body is small, and the function of the blade root as the strength member counts. Therefore, the rigidity can be adjusted to be high by increasing the content of the carbon-based material in the corner fillet part 13.

Also, according to the present embodiment, since the displacement around the opening 25 of the fuselage 22 is large, even when the pull-off stress to be applied to the corner part 15 around the opening 25 is large, the rigidity can be adjusted to be low by decreasing the content of the carbon-based material in the corner fillet part 13. Therefore, the corner fillet part 13 can prevent an increase in the stress and can preferably follow the displacement around the opening 25.

Also, according to the present embodiment, since the displacement of the center part of the tank 27 in the length direction is large, even when the pull-off stress to be applied to the center part of the tank 27 is large, the rigidity can be adjusted to be low by decreasing the content of the carbon-based material in the corner fillet part 13. Therefore, the corner fillet part 13 can prevent an increase in the stress and can preferably follow the displacement of the center part of the tank 27. On the other hand, the rigidity of the intersection part 30 of the tank 27 can be adjusted to be high by increasing the content of the carbon-based material in the corner fillet part. Therefore, the intersection part 30 of the tank 27 can function as a strength member.

In the present example, the film adhesive has been used as a thermosetting resin material forming the corner fillet part 13. However, the material of the corner fillet part 13 is not especially limited.

Also, in the present embodiment, the rigidity of the corner fillet part 13 is adjusted by adjusting the content of the carbon-based material relative to the thermosetting resin material and the carbon-based material included in the corner fillet part 13. However, the structure is not limited to this. For example, the rigidity of the corner fillet part 13 may be adjusted by changing the kind of the material to be used as the resin material and the rigidity material, and the rigidity may be adjusted by changing the shape or the size of the corner fillet part.

### Reference Signs List

- 1: AIRCRAFT
- 10: COMPOSITE STRUCTURE
- 11: FIRST COMPOSITE MATERIAL
- 12: SECOND COMPOSITE MATERIAL
- 13: CORNER FILLET PART
- 15: CORNER PART
- 17: ADHESIVE LAYER
- 21: MAIN WING
- 22: FUSELAGE
- 25: OPENING
- 27: TANK
- 29: WALL SURFACE
- 30: INTERSECTION PART
- P: DESIGN SHAPE
- S: AREA OF DESIGN SHAPE
- L: BASE OF DESIGN SHAPE
- h: HEIGHT OF DESIGN SHAPE

## Claims

1. A design method for designing the corner fillet part (13) provided at a corner part (15) formed by a first composite material (11) and a second composite material (12) in a composite structure (10), the design method comprising:
deriving a pull-off stress to be applied to the composite structure (10), and
setting the rigidity of the corner fillet part (13) based on the derived pull-off stress and adjusting the rigidity of the corner fillet part (13) accordingly to adjust a pull-off stress to be applied to the corner part (15).

2. The design method for a corner fillet part (13) according to claim 1, wherein
when the derived pull-off stress is large and the pull-off stress to be applied to the corner part (15) is to be decreased, the rigidity of the corner fillet part (13) is decreased, and
when the derived pull-off stress is small, the rigidity of the corner fillet part (13) is increased.

3. The design method for a corner fillet part (13) according to claim 1 or 2, wherein
the corner fillet part (13) includes a resin material and a rigidity material, and
the rigidity is adjusted based on a content of the rigidity material relative to the resin material and the rigidity material.

4. The design method for a corner fillet part (13) according to claim 1 or 2, wherein
the corner fillet part (13) includes a resin material and a rigidity material, and
the rigidity is adjusted based on kinds of materials used as the resin material and the rigidity material.

5. The design method for a corner fillet part (13) according to claim 1 or 2, wherein
the rigidity of the corner fillet part (13) is adjusted based on a shape or a size of the corner fillet part (13).

## Patentansprüche

1. Ein Gestaltungsverfahren zum Entwerfen eines Eckenkehlnahtteils (13), das an einem Eckenteil (15) vorgesehen ist, das durch ein erstes Verbundmaterial (11) und ein zweites Verbundmaterial (12) in einer Verbundstruktur (10) ausgebildet ist, wobei das Gestaltungsverfahren aufweist:
Ableiten einer Abreißbelastung beziehungsweise Abreißspannung, die auf die Verbundstruktur (10) anzuwenden ist, und
Einstellen der Steifigkeit des Eckenkehlnahtteils (13) basierend auf der abgeleiteten Abreißbelastung und Einstellen der Steifigkeit des Eckenkehlnahtteils (13) entsprechend, um eine auf das Eckenteil (15) anzuwendende Abreißbelastung einzustellen.

2. Das Gestaltungsverfahren für ein Eckenkehlnahtteil (13) gemäß Anspruch 1, wobei
wenn die abgeleitete Abreißbelastung groß ist und die auf das Eckenteil (15) anzuwendende Abreißbelastung zu verringern ist, die Steifigkeit des Eckenkehlnahtteils (13) verringert wird, und
wenn die abgeleitete Abreißbelastung klein ist, die Steifigkeit des Eckenkehlnahtteils (13) erhöht wird.

3. Das Gestaltungsverfahren für ein Eckenkehlnahtteil (13) gemäß Anspruch 1 oder 2, wobei
das Eckenkehlnahtteil (13) ein Harzmaterial und ein Steifigkeitsmaterial aufweist, und
die Steifigkeit basierend auf einem Gehalt des Steifigkeitsmaterials relativ zu dem Harzmaterial und dem Steifigkeitsmaterial eingestellt wird.

4. Das Gestaltungsverfahren für ein Eckenkehlnahtteil (13) gemäß Anspruch 1 oder 2, wobei
das Eckenkehlnahtteil (13) ein Harzmaterial und ein Steifigkeitsmaterial aufweist, und
die Steifigkeit basierend auf Arten von Materialien, die als das Harzmaterial und das Steifigkeitsmaterial verwendet werden, eingestellt wird.

5. Das Gestaltungsverfahren für ein Eckenkehlnahtteil (13) gemäß Anspruch 1 oder 2, wobei
die Steifigkeit des Eckenkehlnahtteils (13) basierend auf einer Form oder Größe des Eckenkehlnahtteils (13) eingestellt wird.

## Revendications

1. Procédé de conception pour concevoir la partie (13) de congé de coin prévue à une partie (15) de coin formée par un premier matériau (11) composite et par un deuxième matériau (12) composite d'une structure (10) composite, le procédé de conception comprenant :
déduire une contrainte d'arrachement à appliquer à la structure (10) composite et
fixer la rigidité de la partie (13) de congé de coin sur la base de la contrainte d'arrachement, qui a été déduite, et régler la rigidité de la partie (13) de congé de coin en conséquence, pour régler une contrainte d'arrachement à appliquer à la partie (15) de coin.

2. Procédé de conception d'une partie (13) de congé de coin suivant la revendication 1, dans lequel
lorsque la contrainte d'arrachement, qui a été déduite, est grande et lorsque la contrainte d'arrachement à appliquer à la partie (15) de coin doit être diminuée, on diminue la rigidité de la partie (13) du congé de coin, et
lorsque la contrainte d'arrachement, qui a été déduite, est petite, on augmente la rigidité de la partie (13) du congé de coin.

3. Procédé de conception d'une partie (13) de congé de coin suivant la revendication 1 ou 2, dans lequel
la partie (13) de congé de coin comprend un matériau de résine et un matériau de rigidité et
on règle la rigidité sur la base d'une teneur en le matériau de rigidité par rapport au matériau de résine et au matériau de rigidité.

4. Procédé de conception d'une partie (13) de congé de coin suivant la revendication 1 ou 2, dans lequel
la partie (13) du congé de coin comprend un matériau de résine et un matériau de rigidité et
on règle la rigidité sur la base des natures des matériaux utilisés, comme matériau de résine et matériau de rigidité.

5. Procédé de conception d'une partie (13) de congé de coin suivant la revendication 1 ou 2, dans lequel
on règle la rigidité de la partie (13) de congé de coin sur la base d'une forme ou d'une dimension de la partie (13) du congé de coin.
